# EUROPÄISCHE PATENTANMELDUNG

(11) **EP 1 643 336 A1**
(43) Veröffentlichungstag der Anmeldung: **05.04.2006**
(21) Anmeldenummer: 04023347.0
(22) Anmeldetag: 30.09.2004
(51) Int. Cl.: G06F 1/00

(54) **Eindeutige Produktidentifikation**

(71) Anmelder: SIEMENS AKTIENGESELLSCHAFT, 80333 München (DE)
(72) Erfinder: Hartlage, Heribert, 81241 München (DE)

(57) **Zusammenfassung**

Die Komponenten eines Produkts werden mit Hilfe von Prüfsummen gekennzeichnet. Die Prüfsummen werden ihrerseits mit Hilfe einer Masterprüfsumme gekennzeichnet. Vorzugsweise werden asymmetrisch verschlüsselte digitale Signaturen als Prüfsummen eingesetzt.

Durch die Überprüfbarkeit der Prüfsummen wird sichergestellt, dass keine der Komponenten durch gleichzeitigen Austausch einer Komponenten und der zugehörigen Prüfsumme verändert wird.

## Beschreibung

In dem internationalen Standard M.3010 (02/2000) der ITU-T ist eine Referenzarchitektur eines Telecommunications Management Network (TMN) zur Überwachung und Steuerung eine Netzes für Telekommunikationsanwendungen beschrieben, bei der davon ausgegangen wird, dass das von dem TMN gesteuerte Netz unterschiedliche Typen von Netzelementen umfasst, die üblicherweise mit Hilfe von unterschiedlichen Kommunikationsmechanismen (d.h. Protokollen, Meldungen, Management Informationen - auch Objektmodell genannt) gesteuert werden.

Dieses TMN umfasst folgende Funktionalitäten:
- Operations Systems Function (OSF), die das "eigentliche" Management des Telekommunikationsnetzes realisiert.
- Workstation Function (WSF), die zur Darstellung der Steuervorgänge und des Netzzustandes für einen menschlichen Anwender des TMN dient.
- Network Element Function (NEF), die eine Schnittstelle zur Steuerung der Telekommunikations-Funktionen der Netzelemente darstellt. Die Schnittstelle definiert den spezifischen Kommunikationsmechanismus des jeweiligen Netzelements, der ggf. nicht standardisiert ist. Die Summe aller Management Informationen des NE wird als Management Information Base (MIB) des NE bezeichnet. Sie wird im weiteren auch NE-MIB ganannt.
- Transformation Function (TF), die zur Verbindung von Komponenten mit unterschiedlichen Kommunikationsmechanismen und insbesondere zur Anbindung von Netzelementen, die keine standardisierte NEF aufweisen, an das TMN eingesetzt wird. Sie wird in dem Standard M.3010 (05/96) auch als Mediation Function bzw. als Q-Adaption Function bezeichnet.

Desweiteren werden die Funktionalitäten entsprechend des FCAPS Schemas, soweit möglich, in folgende Gruppen klassifiziert:
- F =: Fault
- C =: Configuration
- A =: Accounting
- P =: Performance
- S =: Security

Die Funktionen werden durch gegenständliche Erzeugnisse - auch Produkte genannt - bewirkt, die beispielsweise als Netzelement (NE), Operations System (OS), Applikation, Terminal, Router, Switch, Datenbankserver oder Computerprogrammprodukt (auch Programm, Applikationen oder Software genannt) ausgebildet sein können, aber selbstverständlich nicht auf diese beschränkt sind.

Die Funktion NEF ist üblicherweise einem NE zugeordnet, während die Funktionen OSF und WSF meist einem OS zugeordnet sind. Üblicherweise ist einem OS eine Vielzahl von NE zugeordnet, wobei das OS meist zentralisiert ist, während die NE in dem Netz dezentral auf eine Vielzahl von Standorten verteilt sind.

Ein OS kann mehrere Programme umfassen. Die Programme können beispielsweise als Managementapplikationen zur Steuerung unterschiedlicher Netztechnologien eines Kommunikationsnetzes ausgebildet sein, von denen jeweils eine für die jeweils gesteuerte Technologie relevante, applikationsspezfische Teilmenge der Resourcen des Netzes modelliert, visualisiert und gesteuert wird.

Die Programme werden von Hardware (z.B. Prozessor, i/o Baugruppe) ausgeführt, die in den gegenständlichen Erzeugnissen vorgesehen ist. Diese Ausführung wird von Supportsoftware (z.B. Multitasking bzw. Multithreading Betriebssystem, Datenbanksystem, Windows System) unterstützt.

Die Security Funktionalität wird in den Erzeugnissen beispielsweise durch Sicherheitsmechanismen realisiert, bei denen der abgesicherte Zugang zu den Erzeugnissen mit Zugangsbereichtigungen - z.B. über eine Benutzerkennung (userId) und ein Kennwort (password) und/oder über Vorlage eines Sicherheitszertifikats - ermöglicht wird.

Die Security Funktionalität umfasst auch die Aufgabe, jederzeit eine eindeutige Identifikation einer installierten Software zu ermöglichen. Diese Aufgabe ist gerade bei TMN Software besonders komplex, weil die Anzahl der installierten Dateien und erforderlichen Konfigurationen wegen der hohen Zahl der TMN Funktionen sehr umfangreich ist.

Nach dem bislang Ausgeführten wird klar, dass die Umsetzung der beschriebenen Architektur in konkrete Lösungen infolge der ausgeprägten Verteiltheit des Systems und der Vielzahl an unterschiedlichen Systemkomponenten und -anforderungen eine hochgradig komplexe technische Problemstellung darstellt.

Es ist Aufgabe der Erfindung, zumindest eines der bestehenden Probleme zu erkennen und durch Angabe von zumindest einer Lehre zum technischen Handeln zu lösen.

Die Erfindung beruht auf folgenden Erkenntnissen:
- Eine eindeutige Identifikation der installierten Software ist besonders wichtig, wenn ein Computerprogrammprodukt den Wirkungskreis eines Softwareherstellers verlässt und in den Wirkungskreis eines Dritten gelangt, indem es beispielsweise auf einem Rechner eines Kunden des Softwareherstellers - z.B. als Teil des OS eines Kommunikationsnetzbetreiber - installiert wird. Bei Störungen der Software ist im diesem Zusammenhang besonders wichtig herauszufinden, ob die ursprünglich installierte Software verändert worden und somit nicht mehr identisch mit der ursprünglich installierten Software ist.
- An die Klärung dieser Frage schließen sich oft komplexe Haftungsfragen an, die von großer wirtschaftlicher Bedeutung sein können. Aufgrund von Verträgen und gesetzlichen Bestimmungen ist der Bereitsteller von Software zu Wartungs- und Garantiediensten gegenüber dem Kunden verpflichtet. Da diese Dienste zu weiteren Kosten beim Bereitsteller (Hersteller) führen, ist es sinnvoll, diese Arbeiten nur auf die nachweislichen gelieferten Dateien zu beschränken. Hierzu ist eine zuverlässige Produktidentifikation der Dateien erforderlich.
- Software zur Verwaltung und Steuerung von Telekommunikationsausrüstung wird üblicherweise als eine große Menge von einzelnen Dateien entwickelt und auf dem Zielsystem installiert. Daraus resultiert eine hohe Komplexität bei der Überprüfung hinsichtlich a) Produktidentität, b) der Veränderung einzelner Dateien, unabhängig davon ob gewollt oder ungewollt, und c) der legalen oder illegalen Nutzung durch den Anwender.

Die bekannten Techniken lösen die erkannte Problematik nicht oder haben zumindest unerwünschte Nebeneffekte:
- Eine Technik zu Punkt a) sieht vor, die Produktidentifikation durch entsprechende digitale Logos und einprogrammierte Daten zu prüfen. Zu den einprogrammierten Daten gehören der Firmenname, eine Produkt- und eine Versionsbezeichnung. Die Informationen allerdings können in geänderte Dateien kopiert werden, so dass eine ungewollte Änderung nicht wirksam verhindert werden kann.
- Eine alternative Technik sind einfache Prüfsummenverfahren. Diese erfüllen jedoch die Forderung nach Produktidentität nicht in ausreichenden Maß. Einerseits kann das Prüfsummenverfahren bekannt sein; andererseits sind Prüfsummenverfahren relativ einfach und das verwendete Verfahren kann nachträglich bestimmet werden. Dann ist es ein leichtes die Prüfsumme selbst zu berechnen und damit die Produktidentität fälschlicherweise vorzutäuschen. Im Ergebnis lässt sich die Produktidentität auf diese Weise nicht hinreichend belegen.
- Eine Technik zu Punkt b) sieht vor, dass durch den Hersteller eine gewollte Änderung einzelner Dateien im Rahmen von Upgradeverfahren und Software-Patches durchgeführt wird. Dabei werden in aller Regel die verfügbaren Versionen der Software berücksichtigt. Zum Teil wird neue Software als komplettes Paket geliefert. Das komplette Paket wird mit einer einfachen Fehlersumme oder einer digitalen Unterschrift gesichert. Damit wird die Lieferung eindeutig identifiziert. Nach Installation der Software können jedoch einzelne Dateien wieder geändert werden, ohne dass eindeutig nachvollzogen werden kann, welche der gelieferten Dateien geändert wurde. Es kann lediglich eine Änderung der Lieferung als Ganzes erfasst werden. Eine detaillierte Aussage ist nicht möglich.
- Ungewollte Änderungen der Software, beispielsweise durch bösartige Programme wie z.B. Viren, Trojaner, etc. werden gar nicht erfasst.
- Zu Punkt c) sind Lizenzierungsverfahren bekannt, die z.B. eine ausführbare Hülle um das zu schützende Programm setzen. Das Programm ist ohne diese Hülle nicht mehr ausführbar. Sofern man diese Hülle jedoch beibehält, kann das eigentliche Programm weiterhin verändert werden.

Eine Lösung für diese erfindungsgemäß erkannte Problemsituation sowie vorteilhafte Ausgestaltungen dieser Lösung sind in den Patentansprüchen angegeben.

Die Erfindung wird nachfolgend anhand von Ausführungsbeispielen, die auch in den Figuren dargestellt sind, erläutert. Es sei betont, dass die aufgezeigten Ausführungen der Erfindung trotz ihrer teilweise sehr detailgetreuen Darstellung lediglich beispielhafter Natur und nicht einschränkend zu verstehen sind. Es zeigt:

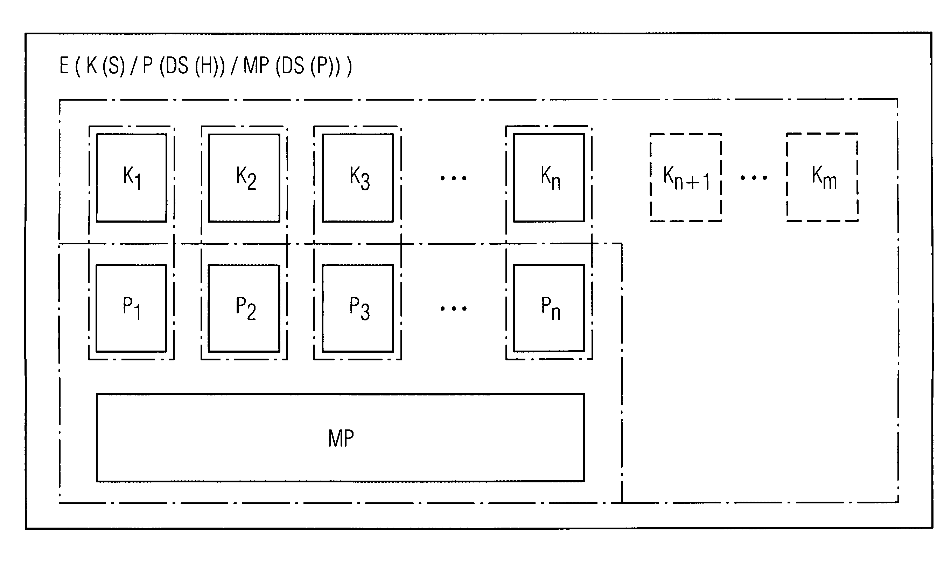

- Figur 1: eine beispielhaftes erfindungsgemäßes Erzeugnis E, umfassend mehrere Komponenten K und Prüfsummen P sowie zumindest eine Masterprüfsumme MP

Die Komponenten K sind beispielsweise als Software S ausgebildet, die z.B. in mehreren Dateien gespeichert ist. Zur vereinfachten Darstellung der Erfindung wird davon ausgegangen, dass jede Komponente eindeutig einer bestimmten Datei entspricht. Für den Fachmann ist jedoch klar, dass diese Einschränkung nicht zwingend ist und jederzeit eine Komponente auch eine Vielzahl von Dateien umfassen kann. Es sind insgesamt m Komponenten K₁-Kₘ dargestellt.

Die Prüfsummen P sind beispielsweise als Hashwerte H ausgebildet. Die Hashwerte H sind beispielsweise nach dem MD5 Verfahren gebildet, bei dem für jede berücksichtige Dateien eine entsprechende Zeichenkette gebildet wird. Die Prüfsummen P können auch als digitale Signaturen DS ausgebildet sein, die das Ergebnis einer vorzugsweise asymmetrischen Verschlüsselung der Hashwerte H mit Hilfe eines privaten Schlüssels des Softwareherstellers darstellen. Digitale Signaturen DS werden in der Fachwelt auch als digitale Unterschriften bezeichnet.

Bei einer bevorzugten Ausführungsform werden die Prüfsummen P nur für solche Komponenten K gebildet, die während der Lebensdauer des Erzeugnisses E und insbesondere während des Betriebs der Software S unverändert bleiben. Ausgenommen sind also beispielsweise Dateien K, in denen die Passwörter von Nutzern der Software S gespeichert werden, weil sich der Inhalt dieser Datei K mit jeder Änderung der Passwörter ändert. Nach einer Änderung kann die eindeutige Identität der Datei K mit Hilfe einer zugeordneten Prüfsumme P nicht mehr sichergestellt werden, was bei einem derartigen Fall auch gar nicht gewollt ist. Diese Situation ist in Figur 1 angedeutet, indem lediglich n Komponenten K₁-Kₙ der m Komponenten K₁-Kₘ (n ≤ m) mit einer Prüfsumme kombiniert werden. Wenn alle Komponenten unverändert bleiben, dann ist n = m. In diesem Fall ist die Menge der Komponenten Kₙ₊₁ bis Kₘ leer.

Die zumindest eine Masterprüfsumme MP ist zumindest über die Prüfsummen P gebildet, kann aber auch über eine beliebige Anzahl von Komponenten K gebildet sein. Diese Wahlfreiheit ist in Figur 1 dadurch angedeutet, dass die gestrichelte Box, in der die Masterprüfsumme MP liegt, in einer ersten Ausführung nur die Prüfsummen P und in einer zweiten auch die Komponenten K umfasst.

Als Lösung für die erwünschte eindeutige Identifikation eines Produktes E wird vorgeschlagen, die eindeutige Identifikation des Produktes E - bzw. mit anderen Worten, die eindeutige Identität des installierten Produktes E mit dem ursprünglich ausgelieferten Produkt E - mit Hilfe eines zweistufigen Prüfmechanismus zu ermitteln. Die erste Stufe umfasst Prüfsummen P, mit denen einzelne Komponenten K des Produktes E eindeutig identifiziert werden können, so dass feststeht, dass die Komponenten K des ursprünglich ausgelieferten Produktes E nicht verändert wurden. Die zweite Stufe zumindest umfasst eine Masterprüfsumme MP, mit der zumindest die Prüfsummen P eindeutig identifiziert werden, so dass sichergestellt ist, dass die Prüfsummen P nicht verändert wurden. Durch die zweite Stufe wird somit verhindert, dass ein Pärchen, bestehend aus einer Komponente K und einer zugehörigen Prüfsumme P, als Ganzes ausgetauscht wird.

Ein derartiges Produkt E wird beispielsweise hergestellt, indem mit der Produktion der Kundensoftware aus allen Dateien K der Software S mit Ausnahme derjenigen, die während der Ausführung der Software S geändert werden, jeweils Prüfsummen P, die z.B. als digitale Unterschrift DS ausgebildet sind, vorzugsweise basierend auf asymmetrischer Verschlüsselung gewonnen wird. Dazu wird aus jeder Datei zunächst mittels Hashing eine z.B. 16 Byte lange Zeichenkette H gebildet. Diese Zeichenkette H aus dem Hashing wird wahlweise mit einem privaten Schlüssel verschlüsselt und ergibt eine digitale Unterschrift DS.

Die digitalen Unterschriften DS werden z.B. in einer eigenen Unterschriftendatei abgelegt. Die Unterschriftendatei ist so ausgestaltet, dass die Zuordnung zwischen einer Unterschrift DS und einer zugeordneten Datei K möglich ist.

Die Unterschriftdatei mit den digitalen Unterschriften wird selbst wiederum mit einer digitalen Master-Unterschrift MP signiert. Die Unterschriftendatei und die zugeordnete digitale Master-Unterschrift MP werden z.B. in einer gemeinsamen Datei abgelegt.

Die asymmetrische Verschlüsselung beruht auf zwei Schlüsseln, einem privaten und einem öffentlichen. Der private Schlüssel wird bei dem Softwarehersteller hinterlegt, der für die Softwareproduktion zuständig ist. Der öffentliche Schlüssel wird mit der Software S ausgeliefert, damit die Unterschriften DS zur Laufzeit der Software S geprüft werden können.

Bei der Prüfung der eindeutigen Identität der Software S werden für die zu prüfenden Dateien K₁-Kₙ mit dem gleichen Hashing wie bei der Herstellung des Produktes E die z.B. 16 Byte lange Zeichenkette H gebildet. Aus den Zeichenketten H wird anschließend die Master-Unterschrift MP gebildet.

Die soeben gebildete Master-Unterschrift MP wird mit der in der Unterschriftendatei gespeicherten Master-Unterschrift MP vergleichen. Stimmen beide überein, steht die eindeutige Identität der Prüfsummen P fest. Wenn entweder die digitale Master-Unterschrift MP oder eine der Prüfsummen P geändert wurde, dann passen die Zeichenketten nicht mehr zueinander.

Danach werden die digitale Unterschriften DS aus der Unterschriftendatei entnommen und, falls erforderlich, mit dem öffentlichen Schlüssel entschlüsselt. Das Ergebnis der Entschlüsselung wird mit der gerade gebildeten Zeichenkette H verglichen. Stimmen beide Zeichenketten überein, passen die Dateien K₁-Kₙ und die digitale Unterschrift P₁-Pₙ zusammen. Wenn entweder eine digitale Unterschrift P oder eine zugehörige Datei K geändert wurden, dann passen die zu ermittelnden Zeichenketten nicht mehr zueinander. Somit kann die Echtheit einer Datei K mittels einer digitalen Unterschrift DS geprüft werden.

Das Prüfen der digitalen Unterschrift wird beispielsweise von einem eigenständigen Prüfprogramm übernommen, das sowohl von der Steuersoftware gestartet werden kann als auch unabhängig davon. Dieses Programm zeigt dann alle Dateien K an, deren digitale Unterschrift DS nicht mehr stimmt.

Ein weiteres Ausführungsbeispiel betrifft eine partielle Softwareverbesserung, z.B. Fehlerbehebung, bei der einzelne Dateien K beim Kunden ausgetauscht werden. In diesem Fall werden neben den einzelnen Dateien K ebenfalls die entsprechenden digitalen Unterschriften P in der Unterschriftendatei ausgetauscht und die Master-Unterschrift MP neu gebildet.

Mit der Erfindung ist eine Vielzahl von weiteren Vorteilen verbunden:
- Werden alle auf dem Dateisystem unveränderbaren Dateien digital unterschrieben und die digitale Unterschriften regelmäßig und zusätzlich bei Bedarf, z.B. Garantiefall, geprüft, dann können durch Verträge Gewährleistungsrechte ausgeschlossen werden, wenn mindestens eine unveränderbare Datei eine ungültige digitale Unterschrift besitzt. Damit sind erhebliche Kostenreduzierungen möglich.
- Urheberrechte lassen sich insbesondere auch von Programmteilen absichern, weil diese wegen der Master-Unterschrift nicht mehr separat ausgetauscht werden können.
- Produktpiraterie hinsichtlich von Softwarelösungen kann erkannt werden. Insbesondere kann der Hersteller von Software sicher sein, dass seine Kunden nur Software vom Hersteller beziehen und nicht Teile seiner gelieferten Software durch Drittprodukte ersetzen.
- Mit Hilfe der digitalen Unterschriften kann der Kunde sicher sein, dass die Fehlerkorrekturen und die Folgeversionen der Software vom Hersteller stammen.
- Bösartige Programme wie z.B. ein Virus können einzelne Dateien verändern. Damit kann die Funktionsweise der Software beeinträchtig oder gar ganz aufgehoben werden. Anhand der digitalen Unterschriften kann die Prüfungssoftware feststellen, ob Dateien geändert wurden. Es ist jederzeit möglich, die einzelnen unveränderbaren Dateien der Software daraufhin zu prüfen, ob diese beispielsweise durch bösartige Programme verändert wurden.
- Veränderungen von Dateien können zeitnah aufgedeckt werden und dem Nutzer der Software auf der Basis des Prüfprogramms angezeigt werden. Auch andere Reaktionen wie das Anhalten der Software sind denkbar. Damit kann gerade im Fall von Änderungen durch bösartige Programme weiterer Schaden auch von den zu verwaltenden Netzelementen abgewendet werden. Durch ein rasches Erkennen von unzulässigen Änderungen werden Systemschäden auf ein Minimum reduziert. Für einen Netzbetreiber ergeben sich durch die damit bewirkte Reduktion der OPEX (OPerational EXpenses) wirtschaftliche Vorteile.
- Wenn Teile der Software eigenständig verkauft werden sollen, dann sollen diese Teile separat lizenzierbar sein, vor allem dann, wenn trotzdem einer nur teilweisen Lizenzierung alle Softwareanteile geliefert werden. Letzteres vereinfacht für den Hersteller die Logistik zur Bereitstellung von Software erheblich. Insbesondere die Menge der zu liefernden Softwarekonfigurationen kann erheblich reduziert werden.
- Das Programm, das die digitalen Unterschriften prüft, kann anhand von Lizenzschlüsseln auch entscheiden, ob aufzurufende Dateien legal genutzt werden oder auch nicht. Dazu werden (unveränderbare) Merkmale aus den Dateien der Steuersoftware mit Merkmalen aus dem zugehörigen Lizenzschlüssel verglichen. Auf der Basis der digitalen Unterschrift wird dazu eine Nutzung von separat lizenzierbarer Software beispielsweise dadurch bewirkt, dass Dateien, die zu der separat lizenzierbaren Software gehören, mit einer Lizenzmarke versehen werden, die Teil der Datei ist und deshalb ebenfalls durch die digitale Unterschrift geschützt wird. Die Nutzung dieser Dateien ist erst möglich, wenn ein entsprechender Lizenzschlüssel in das System eingelesen wird, und anschließend mit der Lizenzmarke und der digitaler Unterschrift dieser Dateien erfolgreich geprüft wird. Beispielsweise wird die Lizenzmarke als weitere unveränderliche Datei zusammen mit einer entsprechend erweiterten der Unterschriftendatei beim Kunden eingespielt und anschließend erfindungsgemäß von dem Prüfprogramm bearbeitet. Insbesondere Applikationen auf der Basis von Java, die erst später entwickelt und vermarktet werden, lassen sich so leichter in ein bereits bestehendes Softwaresystem und Lizenzierungsverfahren integrieren.
- Die spezifische Anwendung von digitalen Unterschriften auf die im Produkt unveränderbaren Dateien erlaubt Produktidentifikation, Produktsicherheit und neuartige Lizenzierung. Zum Beispiel sind ausführbare Dateien im Dateisystem unveränderbar abgelegt. Dabei ist unerheblich, wenn diese beim Hochladen in den Hauptspeicher während der Programmausführung im Hauptspeicher verändert werden. Erst wenn diese Veränderungen in die im Dateisystem abgelegte Datei zurück geschrieben werden, ist eine solche Datei nicht mehr unveränderbar. Folgende andere im Dateisystem abgelegte Dateien können als unveränderbar in diesem Sinne betrachtet werden: dynamisch linkbare Bibliotheksdateien, Grafikdateien, ...
- Eine Umsetzung der Erfindung erfordert keine prinzipiellen Änderungen des bisherigen Standes der Technik, sondern lässt sich grundsätzlich nachträglich als Baustein - insbesondere als modifiziertes oder zusätzliches Computerprogrammprodukt - einfügen.
- Der Zeitpunkt der Realisierung ist unabhängig von dem Zeitpunkt der Realisierung anderer Funktionen.
- Mit der Erfindung wird sichergestellt, dass die einzelnen Komponenten des Gesamtsystems nur in geringem Maße belastet werden und damit die Stabilität des Gesamtsystems erhöht wird.

Abschließend sei darauf hingewiesen, dass die Beschreibung der für die Erfindung relevanten Komponenten des Systems grundsätzlich nicht einschränkend in Hinblick auf eine bestimmte physikalische Realisierung oder Zuordnung zu verstehen ist. Für einen einschlägigen Fachmann ist insbesondere offensichtlich, dass die Erfindung teilweise oder vollständig in Software und über mehrere physikalische Erzeugnisse / Computerprogrammprodukte verteilt realisiert werden kann.

## Patentansprüche

1. Erzeugnis (E), umfassend
- Komponenten (K),
- Prüfwerte (P) zur Prüfung der Integrität zumindest eines Teils der Komponenten,
- zumindest einen Masterprüfwert (MP) zur Prüfung der Integrität von zumindest den Prüfwerten.

2. Erzeugnis nach dem vorstehenden Anspruch, bei dem die Komponenten als Software (S) ausgebildet sind.

3. Erzeugnis nach einem der vorstehenden Ansprüche, bei dem jeder Komponente ein Prüfwert zugewiesen ist und umgekehrt.

4. Erzeugnis nach einem der vorstehenden Ansprüche, bei dem zumindest der Masterprüfwert als digitale Signatur (DS) ausgebildet ist.

5. Herstellungsverfahren für eines der vorstehenden Erzeugnisse mit folgenden Schritten:
(a) Generierung der Prüfwerte unter Berücksichtigung der Komponenten;
(b) Generierung zumindest eines Masterprüfwerts unter Berücksichtigung der Prüfwerte;
(c) Herstellung des Erzeugnisses durch Zusammenfassung der Komponenten, der digitalen Signaturen und der Mastersignatur.

6. Herstellungsverfahren nach dem vorstehenden Anspruch, bei dem ein als digitale Signatur ausgebildeter Prüfwert mit Hilfe eines asymmetrischen Verschlüsselungsverfahrens erzeugt wird.

7. Herstellungsverfahren nach einem der vorstehenden Ansprüche, bei dem die Prüfwerte aus Hashwerten (H) - insbesondere MD5-Hashwerten - gebildet sind, die unter Berücksichtigung der Komponenten erzeugt werden.

8. Herstellungsverfahren nach einem der vorstehenden Ansprüche, bei dem bei einer Änderung einer Komponente zumindest die ihr zugeordnete Prüfsumme sowie die Masterprüfsumme erneut gebildet und das ganze anschließend zu einem geänderten Erzeugnis zusammengefasst wird.

9. Herstellungsverfahren nach einem der vorstehenden Ansprüche, bei dem nur für diejenigen Komponenten Prüfwerte generiert werden, die während der Lebensdauer des Erzeugnisses unverändert bleiben.

10. Prüfverfahren zur eindeutigen Identifikation eines der vorstehenden Erzeugnisse mit folgenden Schritten:
- erneute Erzeugung der Prüfwerte unter Berücksichtigung der Komponenten des Erzeugnisses;
- Prüfung unter Berücksichtigung des Masterprüfwerts, ob die von dem Erzeugnis umfassten Prüfwerte unverändert sind;
- Vergleich der derart geprüften Prüfwerte mit den erneut erzeugten Prüfwerten;
- Bejahung der eindeutigen Identifikation, wenn alle verglichenen Prüfwerte übereinstimmen.
